# EUROPÄISCHE PATENTANMELDUNG

(11) **EP 1 989 987 A2**
(43) Veröffentlichungstag der Anmeldung: **12.11.2008**
(21) Anmeldenummer: 08004371.4
(22) Anmeldetag: 10.03.2008
(51) Int. Cl.: A47L 15/24, B65G 23/44

(54) **Spanneinrichtung für Transporteinrichtung**

(30) Priorität: 07.05.2007 DE 102007021255
(71) Anmelder: MEIKO Maschinenbau GmbH & Co. KG, 77652 Offenburg (DE)
(72) Erfinder: Gaus, Bruno, 77654 Offenburg (DE); Breitschuh, Axel, 77652 Offenburg (DE)
(74) Vertreter: Hörschler, Wolfram Johannes

(57) **Zusammenfassung**

Reinigungsautomat, insbesondere Durchlaufspülmaschine mit einem endlos ausgebildeten Transportband (4) zur Aufnahme für Geschirr, allgemeine Behältnisse oder Gegenstände, die in Transportrichtung (31) durch den Reinigungsautomaten transportiert werden, dadurch gekennzeichnet, dass eine Spannvorrichtung (6, 13, 17) im Ein- oder Auslaufbereich (1) des Reinigungsautomaten leicht von oben zu betätigen ist.

## Beschreibung

### Stand der Technik

Reinigungsautomaten wie z.B. Maschinen, die zur Reinigung von Geschirr, allgemeinen Behältnissen oder dergleichen eingesetzt werden, können mit einem bevorzugt endlos ausgebildeten Band für den Transport des Reinigungsgutes durch die Maschine ausgerüstet sein. Dieses Transportband ist während des Betriebes von einer bestimmten Spannung beaufschlagt. Dadurch kann für die Antriebsräder mit ihrer Verzahnung am Transportband ein sicherer Eingriff gewährleistet werden. Ferner ist es aufgrund der Vorspannung des Transportbandes gewährleistet, dass das Transportband nicht durchhängt. Dadurch ist gewährleistet, dass das zu reinigende Gut wie z.B. Geschirr gleichmäßig, d.h. mit einer gleichmäßigen Transportgeschwindigkeit, insbesondere ruckfrei, transportiert wird. Das Transportband wird gegenwärtig in einer Spannstation gespannt. Nach der Aufstellung und vor der Inbetriebnahme des Reinigungsautomaten wird das Transportband in diesen eingesetzt. Anschließend muss die richtige Spannung am Transportband eingestellt werden. Aufgrund des während des Betriebes auftretenden Verschleißes am Transportband verringert sich im Lauf der Zeit die Spannung des Transportbandes. Um dem entgegenzuwirken, ist das Transportband in regelmäßigen Intervallen nachzuspannen, so z.B. im Rahmen einer regelmäßigen Maschinenwartung. Nach einer langen Nutzungsdauer kann es unter Umständen erforderlich sein, das in der Maschine befindliche Transportband wegen zu hoher Abnutzungs- und Verschleißerscheinungen gegen ein neues Transportband auszutauschen. Zur Demontage des Transportbandes ist dessen Spannung komplett aufzuheben.

Bei aus dem Stande der Technik bekannten Ausführungsformen von Durchlaufspülmaschinen wird das Transportband z.B. direkt manuell von Hand gespannt. Die gespannte Position des Transportbandes wird mittels zweier außen liegend angeordneter Umlenkscheiben festgelegt. Es befindet sich je eine Umlenkscheibe rechts und links im Einlauf- oder Auslaufbereich des Reinigungsautomaten. Die außenliegend angeordneten Umlenkscheiben werden z.B. mit Sechskantschrauben fixiert. Um an diese Schrauben zu gelangen, muss durch das Transportband gegriffen werden. Die Öffnung im Transportband ist sehr schmal, sodass die Zugänglichkeit zu den genannten Sechskantschrauben äußert beschwerlich ist. Weiterhin muss das Wartungspersonal sowohl bei der Montage des Transportbandes als auch bei regelmäßigen Wartungen gleichzeitig die Spannkraft am Band aufbringen, die außenliegend angeordneten Umlenkscheiben verschieben und durch Betätigen der Sechskantschrauben wieder festklemmen. Dies bedeutet, dass zumindest zwei Arbeitskräfte für diese Tätigkeit erforderlich sind, was nicht unerhebliche Kosten nach sich zieht.

Bei weiteren Ausführungen aus dem Stande der Technik ist rechts und links des Transportbandes je eine langen, horizontal angeordneten Sechskantschraube angeordnet. Von der Stirnseite des Einlauf- oder des Auslaufbereiches aus, wird damit eine durchgehende Spannachse horizontal in Maschinenrichtung bewegt bzw. fixiert und auf diesem Wege das Transportband vorgespannt. Die Zugänglichkeit zu diesen Sechskantschrauben ist ausschließlich stirnseitig am Einlauf- oder Auslaufbereich der Maschine gegeben. Befinden sich weitere Bauelemente der gesamten Anlage direkt an dieser Stelle, so z.B. Fördereinrichtungen, kann das Transportband nicht mehr ohne weiteres gespannt oder demontiert werden, da der Abbau dieser, die Zugänglichkeit beeinträchtigenden, Komponenten zuvor erforderlich ist.

Bei einer weiteren Ausführungsform, bei der sich aus den genannten Gründen eine stirnseitige Anordnung der Spannschrauben verbietet, wird eine aufwändig gestaltete Lösung mit Spannschrauben vorgenommen, die im Inneren des Einlauf- oder des Auslaufbereichs der Maschine angeordnet sind. Hierbei muss - wie oben bereits im anderen Zusammenhang beschrieben - ebenfalls durch das Transportband gegriffen werden, sodass sich die oben beschriebenen Nachteile bezüglich Zugänglichkeit einstellen.

### Offenbarung der Erfindung

Der erfindungsgemäß vorgeschlagenen Lösung liegt die Aufgabe zugrunde, eine Spannung eines endlosen Transportmediums wie z.B. eines Transportbandes bereitzustellen, welche die oben beschriebenen Nachteile bzgl. der Zugänglichkeit, der Montage und Wartung sowie Kosten vermeidet.

Erfindungsgemäß wird ein Spannmechanismus vorgeschlagen, der von der Oberseite des Einlauf- oder des Auslaufbereiches der Durchlaufspülmaschine sehr gut zugänglich ist. Des weiteren kann der erfindungsgemäß vorgeschlagene Mechanismus von einer Person leicht bedient werden, sodass der Eingriff einer zweiten Person, besonders zum Aufbringen einer Vorspannkraft auf das als endlos umlaufendes Transportband gestaltete Medium obsolet ist.

In einer ersten Ausführungsform kann der erfindungsgemäß vorgeschlagene Spannmechanismus so gestaltet werden, dass die Spannachse zwischen einander gegenüberliegenden Führungen aufgenommen ist. Die Führung umfasst eine Sperrklinke, die durch eine Feder gegen eine Zahnstange gedrückt wird. Wird nach Auflegen und Verschließen des Transportbandes die Spannachse z.B. durch direkten manuellen Eingriff horizontal nach rechts verschoben, schiebt sich die Zahnstange unter der Sperrklinke durch. Ist die erforderliche Spannung im Transportband erreicht, kann der manuelle Eingriff an der Spannachse entfallen. Ohne weitere Eingriffe wird die Spannachse durch die Zahnstange und die Sperrklinke in der erreichten Position festgehalten. Ein eventuell erforderliches Nachspannen nach einiger Betriebszeit kann in gleicher Weise erfolgen. Ist nach längerer Betriebszeit der Spannweg ausgeschöpft und das Transportband muss gegen ein neues ersetzt werden, kann durch Betätigen einer Schraube die Feder entspannt und die Sperrklinke aus der Zahnstange herausgehoben werden. Dadurch wird die Zahnstange frei und die Spannachse kann soweit horizontal nach links verschoben werden, dass das verschlissene Transportband ausgebaut und durch ein neues ersetzt werden kann. Die vorstehend aufgezählten Arbeitsgänge können in bequemer Art und Weise von oben ausgeführt werden, ohne dass eventuell störende stirnseitige Anbauten an dem Reinigungsautomaten den Ein- bzw. Ausbau behindern und zuvor demontiert werden müssten.

In einer weiteren Ausführungsform des erfindungsgemäß vorgeschlagenen Spannmechanismus ist die Sperrklinke an einem schwenkbaren Hebel angeordnet. Zum Entspannen des Transportbandes durch eine Öffnung im Gestell auf den Hebel gedrückt werden. Durch diese Bewegung wird die Sperrklinke gegen die Kraft einer Feder aus der Zahnstange ausgerückt und die Spannachse wird in ihrer Führung horizontal frei beweglich. Damit die Sperrklinke nicht unbeabsichtigt einrasten kann, kann sie mit Halteelementen, so z.B. einem Haken 15 ausgestattet sein, mit dem die Klinke in entsperrter Position gehalten werden kann.

In einer weiteren Ausführungsform des erfindungsgemäß vorgeschlagenen Spannmechanismus ist die Spannachse in einer Führung aufgenommen. An dieser greift ein Zugmittel an, welches über eine Umlenkung zu einer Mutter geführt ist. Die Mutter ihrerseits steht mit einer Spannschraube in Eingriff. Nach Auflegen und Verschließen des Transportbandes werden die beiden Spannschrauben derart bewegt, dass sich die Mutter entlang des Gewindes nach oben bewegt. Diese Bewegung überträgt sich mittels des Zugmittels auf die Führung und damit auf die Spannachse. Das Transportband kann in der Maschine mit einfachen Handgriffen gespannt werden, ebenso wie ein eventuell erforderliches Nachspannen nach einiger Betriebszeit in gleicher Weise vorgenommen werden kann. Bei dem Zugmittel kann es sich z.B. um ein Seil oder eine Kette oder auch um ein Koppelgetriebe handeln.

Den obenstehend kurz skizzierten Ausführungsformen der erfindungsgemäß vorgeschlagenen Lösung ist gemeinsam, dass sich die Betätigungselemente sämtlich außerhalb von schmutzbehafteten Bereichen einer Durchlaufspülmaschine befinden. Ferner sind die Betätigungselemente der Spannmechanismen an sehr leicht zugänglichen Stellen der Maschine vorgesehen und diese lassen sich durch Wartungspersonal, ohne großen Aufwand betreiben zu müssen, bedienen. Des weiteren können die erfindungsgemäß vorgeschlagenen Spannmechanismen, zur Vorspannung, zum Nachspannen und zum Ein- und Ausbau eines Transportbandes sehr kostengünstig hergestellt und zudem kostengünstig montiert werden.

### Kurze Beschreibung der Zeichnungen

Anhand der Zeichnungen wird die Erfindung nachstehend eingehender beschrieben:
- Figur 1: den Auslaufbereich einer Bandtransportspülmaschine
- Figur 2: Details einer ersten Ausführungsform des erfindungsgemäß vorgeschlagenen Spannmechanismus
- Figur 3: eine weitere Ausführungsvariante des erfindungsgemäß vorgeschlagenen Spannmechanismus und
- Figur 4: eine weitere, dritte Ausführungsform des erfindungsgemäß vorgeschlagenen Spannmechanismus, an dessen Führung ein Zugmittel angreift.

### Ausführungsformen

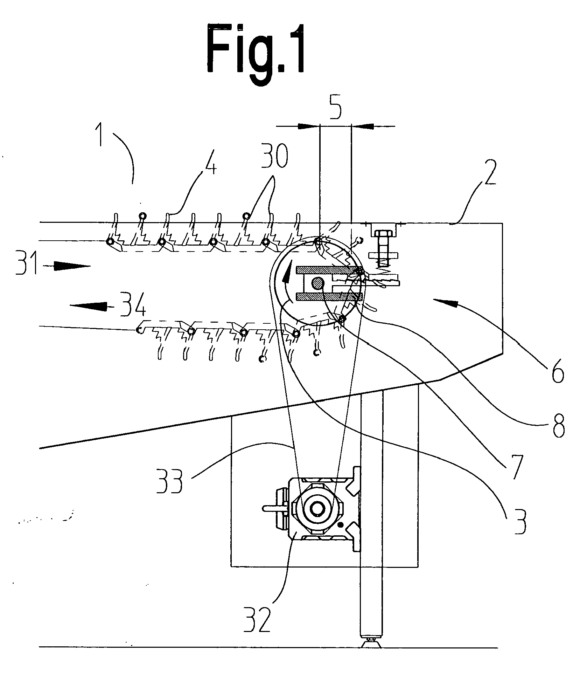

Der Darstellung gemäß Fig. 1 ist ein Auslaufbereich eines Reinigungsautomaten, insbesondere einer als Durchlaufgeschirrspülmaschine beschaffenen Bandtransportmaschine zu entnehmen.

Fig. 1 zeigt einen Spannmechanismus, der von der Oberseite sowohl eines Einlauf- oder eines Auslaufbereiches 1 eines Reinigungsautomaten, insbesondere eines Geschirrspülautomaten, zugänglich ist. Fig. 1 zeigt, dass der Auslaufbereich 1 des Reinigungsautomaten ein Gestell bzw. einen Rahmen 2 umfasst, an dem ein in der Darstellung gemäß Fig. 1 angetriebenes Umlenkrad 3 aufgenommen ist, um welches ein als endloses Transportband ausgebildetes Transportmedium 4 umläuft. Dieses wird in Förderrichtung 31 gefördert, indem es auf das angetriebene Umlenkrad 3 aufläuft, und umfasst eine Anzahl von in regelmäßigen Abständen in Förderrichtung 31 hintereinander liegend angeordneten Fingern 30. Das in Fig. 1 dargestellte Umlenkrad 3 wird über ein Übertragungsmittel 33, bei dem es sich um einen Riemen oder um eine Kette handeln kann, von einem unterhalb des Auslaufbereiches 1 des Reinigungsautomaten angeordneten Antrieb 32 angetrieben. Auf die einzelnen Finger 30 des Transportbandes 4 kann das zu reinigende Gut in Form von Geschirr, Töpfen, Behältern oder dergleichen gestellt werden; andererseits können auf die Finger 30 des endlosen umlaufenden Transportbandes 4 Körbe aufgebracht werden, in denen das zu reinigende Gut vorsortiert enthalten ist.

Wie der Darstellung gemäß Fig. 1 weiterhin entnommen werden kann, ist das angetriebene Umlenkrad 3 auf einer Spannachse 7 in einer Führung 8 aufgenommen.

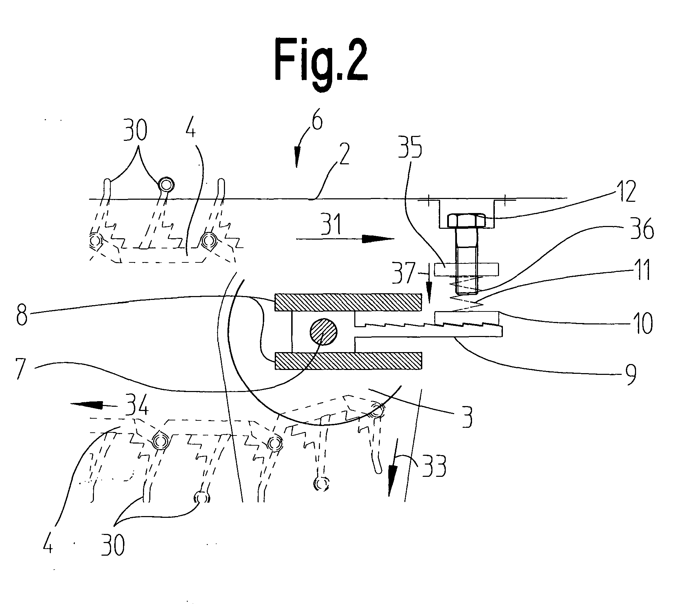

Eine erste Ausführungsform des erfindungsgemäß vorgeschlagenen Spannmechanismus ist mit Bezugszeichen 6 bezeichnet und in Figur 2 im Detail dargestellt.

Der Darstellung gemäß Fig. 2 lässt sich entnehmen, dass die Spanneinrichtung 6 in ihrer ersten Ausführungsform die Zahnstange 9 umfasst, die mit dem Lager der Spannachse bzw. der Antriebswelle 7 verbunden ist. Das Lager der Spannachse bzw. der Antriebswelle 7 ist zwischen zwei Führungsflächen der Führung 8 verschiebbar gelagert und kann um den in Fig. 1 durch Bezugszeichen 5 angedeuteten Spannweg verschoben werden.

Die Zahnstange 9 wirkt mit einer Sperrklinke 10 zusammen. Die Sperrklinke 10 ihrerseits ist in Vorspannrichtung 37 durch eine Feder 11 beaufschlagt, die sich an einem Anschlag 35 einer Schraube 12 aufstützt. Die Schraube 12 ist von der Oberseite des Auslaufbereiches 1 gemäß der Darstellung in Fig. 2 zugänglich und kann durch einen einfachen Schlüssel betätigt werden. Bei entsprechender Verdrehung der Schraube 12 der ersten Ausführungsform 6 der Spannvorrichtung verschiebt sich der am Außengewinde der Schraube 12 angeordnete Anschlag 35 in vertikale Richtung nach unten, sodass die Kraft in Vorspannrichtung 37, die auf die vom Anschlag 35 beaufschlagte Feder wirkt, erhöht wird. Dadurch erhöht sich auch die Kraft, die auf die Sperrklinke 10 wirkt, die an die Oberseite der Zahnstange 9, d.h. an deren Verzahnung eingestellt ist. Die in Fig. 2 am Gestell bzw. im Seitenrahmen 2 gelagerte erste Ausführungsform 6 der Spanneinrichtung ist jeweils an der rechten bzw. linken Seite der Spannachse bzw. der Antriebswelle 7 angebracht. Wird nun, nach Auflegen und Verschließen der einzelnen Glieder des bevorzugt als endlosen Transportbandes ausgebildeten Transportmediums 4, die Spannachse bzw. die Antriebswelle 7 durch direkten manuellen Angriff nach rechts verschoben, bewegt sich die Zahnstange 9 mit ihrer verzahnten Oberseite unter die entsprechend mit einer Gegenverzahnung versehene Sperrklinke 10 hindurch. Ist die erforderliche Spannung des bevorzugt als endloses Transportband 4 ausgebildeten Transportmediums erreicht, kann der manuelle Angriff an der Spannachse 7 bzw. der Antriebswelle 7 entfallen, diese wird durch die miteinander in Eingriff stehende Sperrklinke 10 und Zahnstange 9 in der zuvor manuell eingestellten, erreichten Position festgehalten. Damit ist das Spannen des bevorzugt als endloses Transportband ausgebildeten Transportmediums mit einem einfachen Handgriff ausgeführt. Ein eventuell erforderlich werdendes Nachspannen nach einiger Betriebszeit kann in gleicher Weise erfolgen.

Ist z.B. nach längerer Betriebszeit der Spannweg 5 (vgl. Darstellung gemäß Fig. 1) ausgeschöpft und das Transportband 4 hat seine Verschleißgrenze erreicht und muss ausgetauscht werden, kann durch Betätigen der Schraube 12 die Feder 11 durch entsprechende vertikal nach oben erfolgende Bewegung des Anschlag 35 entspannt werden, sodass die Sperrklinke 10 aus der Zahnstange 9 herausgehoben werden kann. Dadurch wird die Zahnstange 9 frei und die Spannachse 7 bzw. die Antriebswelle 7 kann in der Führung 8 soweit nach links verschoben werden, dass das Transportband 4, welches seine Verschleißgrenze erreicht hat, ausgebaut und durch ein neues ersetzt werden kann.

Diese Arbeitsgänge lassen sich aufgrund der Gestaltung der ersten Ausführungsform 6 der Spanneinrichtung von der Oberseite des Auslaufbereichs 1 her ausführen, ohne dass am, in Fig. 1 dargestellten, Gestell bzw. Rahmen 2 des Auslaufbereiches 1 des Reinigungsautomaten eventuell stirnseitig befindliche Anbauten abzumontieren wären.

In Fig. 2 ist gezeigt, dass das angetriebene Umlenkrad 3 durch das Übertragungsmittel 33, bei dem es sich bevorzugt um einen Riemen oder um eine Kette handelt, in Förderrichtung 31 des umlaufenden endlos, bevorzugt als endloses Transportband ausgebildeten Transportmediums 4, läuft. Die jeweiligen Führungsflächen der Führung 8 sind am Gestell bzw. im Rahmen 2 im Auslaufbereich 1 angeordnet, sodass das Lager, in dem die Spannachse bzw. die Antriebswelle 7 aufgenommen ist, in horizontale Richtung verschoben werden kann. Demnach ist die Spannachse bzw. die Antriebswelle 7, an der das Antriebsrad bzw. ein angetriebenes Umlenkrad 3 aufgenommen ist, nicht fest im Gestell bzw. Rahmen des Auslaufbereichs 1 des Reinigungsautomaten gelagert sondern lässt sich relativ zu diesem in Spannrichtung oder in Entspannrichtung verschieben.

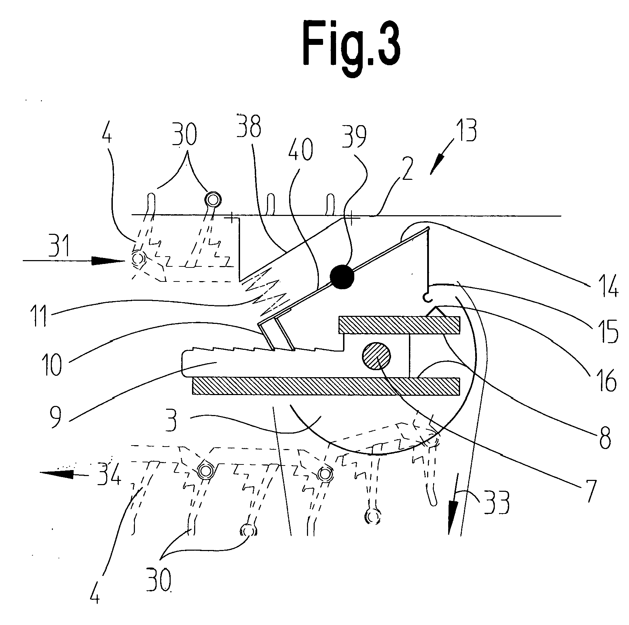

Fig. 3 zeigt eine weitere Ausführungsform des erfindungsgemäß vorgeschlagenen Spannmechanismus.

Wie sich der Darstellung gemäß Fig. 3 entnehmen lässt, umfasst eine zweite Ausführungsform 13 des Spannmechanismus einen Hebel 14, der um eine Achse 39 drehbar gelagert ist. Am Hebel 14 befindet sich ein zweiter Hebelarm 40, der eine Sperrklinke 10 aufweist, der in die Verzahnung an der Oberseite der Zahnstange 9 eingreift. Analog zur Ausführungsform der Führung 8 gemäß Fig. 1 und 2 sind an einer Seitenwange des Gestells bzw. des Rahmens 2 sich in horizontale Richtung erstreckende Führungsflächen 8 ausgebildet, in welchen die Antriebswelle bzw. die Spannachse 7 mit ihrem Lager und daran angeformter Zahnstange 9 verschoben werden kann. Wie aus der Darstellung gemäß Fig. 3 hervorgeht, ist der zweite Hebelarm 40 über die Feder 11 entgegen des Uhrzeigersinns vorgespannt. Die Feder 11 stützt sich an einer Stützfläche 38 ab, sodass die Sperrklinke 10 an der Spitze des zweiten Hebelarmes 40 in die Verzahnung der Zahnstange 9 eingreift und deren Längsbewegung verhindert. Wenngleich in der Darstellung gemäß Fig. 3 lediglich eine Seite des Gestells 2 bzw. des Rahmens des Reinigungsautomaten dargestellt ist, so erstreckt sich die Antriebswelle bzw. Spannachse 7 senkrecht zur Zeichenebene bis zur zweiten Seite des Gestells, wobei an der Spannachse bzw. Antriebswelle 7 zwei Umlenkräder bzw. Antriebsräder 3 aufgenommen sind.

Soll ein Entspannen des in Fig. 3 dargestellten bevorzugt als endloses Transportband ausgebildeten Transportmediums 4 erfolgen, so drückt z.B. die Wartungsperson auf den Bedienhebel 14, sodass der zweite Hebelarm 40 mit an dessen Spitze ausgebildeter Sperrklinke 10 entgegen der Wirkung der Feder 11 ausgelenkt wird. Dadurch erfolgt eine Freigabe der Längsbewegung der Zahnstange 9. Damit ist das Lager der Antriebswelle bzw. der Spannachse 7, welches samt an diesem angeformter Zahnstange 9 zwischen den Flächen der Führung 8 verschiebbar ist, frei beweglich. Damit die Sperrklinke 10 nicht wieder unbeabsichtigt in die Zahnstange 9 bzw. deren Verzahnung einrastet, kann sie z.B. mit Halteelementen, so z.B. einem Haken 15 oder dergleichen, ausgerüstet sein, der es in Verbindung mit einer Öse 16 oder dergleichen ermöglicht, die Sperrklinke 10 in entsperrter Position zu halten, was die Handhabbarkeit der in Fig. 3 in ihrer zweiten Ausführungsform dargestellten Spannvorrichtung bei der Demontage erheblich erleichtert.

Auch bei der in Fig. 3 dargestellten zweiten Ausführungsform 13 des Spannmechanismus ist das Umlenkrad bzw. das Antriebsrad 3 nicht unmittelbar fest an der Seitenwange des Gestells bzw. des Rahmens 2 im Auslaufbereich bzw. im Einlaufbereich 1 des Reinigungsautomaten gelagert. Aufgrund der Gestaltung der Führung 8, zwei parallel zu einander sich in horizontaler Richtung erstreckende Führungsflächen enthaltend, ist nach Entsperrung der Sperrklinke 10 am zweiten Hebelarm 40 die Parallelverschiebung der Zahnstange 9 und damit des Lagers für die Spannachse bzw. die Antriebswelle 7 in horizontaler Richtung ermöglicht.

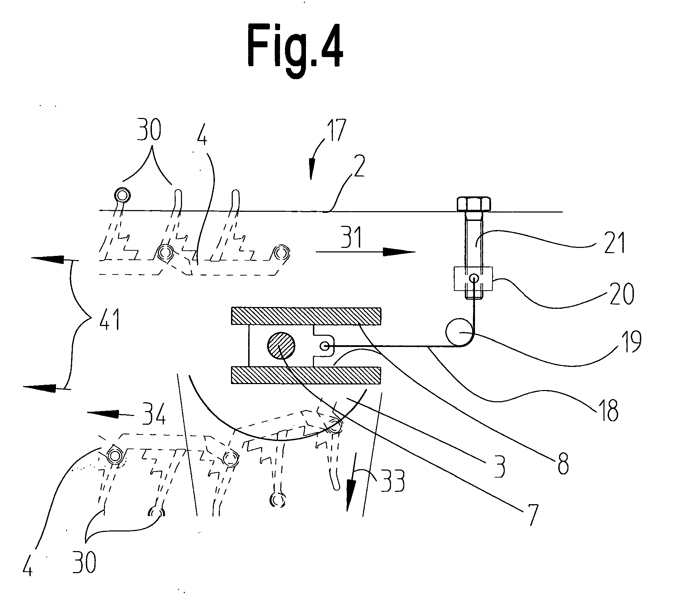

Eine weitere Ausführungsform des erfindungsgemäß vorgeschlagenen Spannmechanismus lässt sich der Darstellung gemäß Fig. 4 entnehmen.

Auch gemäß dieser Ausführungsform ist die Spannachse bzw. Antriebswelle 7 in einem Lager aufgenommen, welches in der Führung 8 verschiebbar aufgenommen ist. Die Führung 8 umfasst zwei in horizontaler Richtung sich im Wesentlichen parallel zueinander erstreckende _Führungsflächen. Durch das Eigengewicht des bevorzugt als endloses Transportband ausgebildeten Transportmediums 4, angedeutet durch Bezugszeichen 41, wird eine Zugkraft auf das Lager, in dem die Spannachse bzw. die Antriebswelle 7 des Umlenkrades bzw. des Antriebsrades 3 gelagert ist, ausgeübt, in welchem durch eine Zugkraft in einem Zugmittel 18 das Gleichgewicht gehalten wird. Bei dem Zugmittel 18 kann es sich um ein Seil, eine Kette, ein Koppelgetriebe oder dergleichen handeln. Wie aus der Darstellung gemäß Fig. 4 hervorgeht, wird das Zugmittel 18 bei einer Umlenkung 19 geführt, an der es eine Umlenkung von horizontaler Richtung in vertikale Richtung erfährt. An einer Mutter 20 ist das Zugmittel befestigt, die ihrerseits auf dem Außengewinde einer Spannschraube 21 geführt ist.

Wie aus der Ausführungsform gemäß Fig. 4 hervorgeht, wird eine Erhöhung der Eigenspannung bzw. das Vermeiden des Durchhängens des bevorzugt als endloses Transportband ausgebildeten Transportmediums 4 dadurch erreicht, dass an der Spannschraube 21, die einen Werkzeugansatz z.B. in Form eines Sechskantkopfes aufweist, ein Drehmoment aufgebracht wird. Bei Verdrehung der Spannschraube 21 wandert die an dieser aufgenommene Mutter 20 in vertikale Richtung nach oben, sodass das Zugmittel 18 gespannt wird. Dessen Spannkraft wird von der vertikalen Richtung an der Umlenkung 19 in horizontale Richtung umgewandelt. Aufgrund der erhöhten Zugkraft im Zugmittel 18 wird das Lager mit darin aufgenommener Spannachse bzw. Antriebswelle 7 in der Führung 8 in horizontale Richtung nach rechts verschoben, sodass sich die Spannkraft in den einzelnen Gliedern des, bevorzugt als endloses Transportband ausgebildeten Transportmediums 4 erhöht.

Der Vollständigkeit halber sei erwähnt, dass das Umlenkrad 3 durch das Übertragungsmittel 33 in Förderrichtung 31 angetrieben ist. Bei dem Übertragungsmittel 33 kann es sich um eine Anzahl von Riemen oder um eine Kette oder dergleichen handeln, die von einem in Fig. 1 dargestellten, unterhalb des Auslaufbereiches bzw. des Einlaufbereiches 1 des Reinigungsautomaten angeordneten elektrischen Antrieb 32 angetrieben ist. Die in Fig. 4 dargestellte dritte Ausführungsform des erfindungsgemäß vorgeschlagenen Spannmechanismus ist durch Bezugszeichen 17 bezeichnet.

Allen im Zusammenhang mit den Fig. 2-4 dargestellten Ausführungsformen der Spannmechanismen ist gemeinsam, dass sich deren Betätigungselemente 12, 14, 21 außerhalb von eventuell mit Schmutz und Speiserückständen behafteten Bereichen im Auslaufbereich bzw. Einlaufbereich 1 des Reinigungsautomaten befinden. Sämtliche Betätigungsmittel 12, 14, 21 befinden sich zudem an sehr leicht, von der Oberseite her zugänglichen Stellen des Reinigungsautomaten und können durch das Wartungspersonal ohne großen Aufwand bzw. Freilegearbeiten unmittelbar bedient werden.

Die in der Darstellung gemäß den Fig. 2-4 dargestellten Ausführungsformen des erfindungsgemäß vorgeschlagenen Spannmechanismus zeichnen sich ferner durch eine kostengünstige Herstellung und insbesondere eine einfache Montage aus. Nachspannarbeiten am endlosen Transportband 4, die in regelmäßigen Intervallen entsprechend der Beanspruchung des bevorzugt als umlaufenden Transportbandes ausgebildeten Transportmediums nötig werden, können, ohne dass Abbauten von Anbaugeräten erforderlich werden, sehr leicht und kostengünstig und enorm bedienerfreundlich von der Oberseite des Auslaufbereiches 1 bzw. des Einlaufbereiches 1 aus vorgenommen werden.

Allen im Zusammenhang mit den Fig. 2-4 dargestellten Ausführungsformen der Spannmechanismen ist gemeinsam, dass das mit Bezugszeichen 3 bezeichnete Antriebsrad oder Umlenkrad auch als Umlenkelement ausgeführt sein kann, welches nicht um seine Achse 7 rotiert. Es ist dann z.B. als halbkreisförmige Scheibe ausgebildet, die nur horizontal in Maschinen- Längsrichtung verschoben werden kann.

Weiterhin ist allen in den Fig. 2-4 dargestellten Ausführungsformen der Spannmechanismen gemeinsam, dass sich der Aufbau auch, durch eine gedachte horizontale Ebene, gespiegelt ausführen lasst.

Dadurch wären die Betätigungselemente 12, 14, 21 von der Unterseite der Maschine aus erreichbar, anstatt von der Oberseite der Maschine, wie in den Figuren 2-4 dargestellt.

### Bezugszeichenliste

- 1: Auslauf-/Einlaufbereich
- 2: Gestell/Rahmen
- 3: Antriebsrad/Umlenkrad/Umlenkelement
- 4: Transportband
- 5: Spannweg
- 6: erste Ausführungsform Spanneinrichtung
- 7: Spannachse/Antriebswelle
- 8: Führung
- 9: Zahnstange
- 10: Sperrklinke
- 11: Feder
- 12: Schraube
- 13: zweite Ausführungsform Spanneinrichtung
- 14: Hebelarm (erster Hebelarm)
- 15: Haken
- 16: Öse
- 17: dritte Ausführungsform Spanneinrichtung
- 18: Zugmittel
- 19: Umlenkung
- 20: Mutter
- 21: Spannschraube
- 30: Finger
- 31: Förderrichtung
- 32: Antrieb
- 33: Übertragungsmittel
- 34: Rücklaufrichtung
- 35: Anschlag
- 36: Gewinde
- 37: Vorspannrichtung
- 38: Stützfläche
- 39: Achse
- 40: zweiter Hebelarm
- 41: Zugspannung Transportband

## Patentansprüche

1. Reinigungsautomat, insbesondere Durchlaufspülmaschine mit einem endlos ausgebildeten Transportband (4) zur Aufnahme für Geschirr, allgemeine Behältnisse oder Gegenstände, die in Transportrichtung (31) durch den Reinigungsautomaten transportiert werden, **dadurch gekennzeichnet, dass** eine Spannvorrichtung (6, 13, 17) im Ein- oder Auslaufbereich (1) des Reinigungsautomaten leicht, von oben zu betätigen ist.

2. Reinigungsautomat, insbesondere Durchlaufspülmaschine mit einem endlos ausgebildeten Transportband (4) zur Aufnahme für Geschirr, allgemeine Behältnisse oder Gegenstände, die in Transportrichtung (31) durch den Reinigungsautomaten transportiert werden, **dadurch gekennzeichnet, dass** eine Spannvorrichtung (6, 13, 17) im Ein- oder Auslaufbereich (1) des Reinigungsautomaten leicht, von unten zu betätigen ist.

3. Reinigungsautomat gemäß einem der vorhergehenden Ansprüche, **dadurch gekennzeichnet, dass** das bevorzugt als endloses Transportband ausgebildetes Transportmedium (4) um Antriebs- oder um Umlenkräder (3) geführt ist, deren Spannachse bzw. Antriebswelle (7) in horizontale Richtung verschiebbar im Ein- oder Auslaufbereich (1) angeordnet ist.

4. Reinigungsautomat gemäß Anspruch 1 oder 2, **dadurch gekennzeichnet, dass** das bevorzugt als endloses Transportband ausgebildetes Transportmedium (4) um Umlenkelemente (3) geführt ist, die sich nicht um eine Achse (7) drehen und die in horizontaler Richtung verschiebbar im Ein- oder Auslaufbereich (1) angeordnet sind.

5. Reinigungsautomat gemäß Anspruch 1 oder 2, **dadurch gekennzeichnet, dass** die Spanneinrichtung (6, 13, 17) Lager für die Spannachse oder Antriebswelle (7) aufweist, die in einer Führung (8) verschiebbar gelagert sind.

6. Reinigungsautomat gemäß Anspruch 1 oder 2, **dadurch gekennzeichnet, dass** die Spannachse (7) der Spanneinrichtung (6, 13, 17) direkt in einer Führung (8) verschiebbar gelagert ist.

7. Reinigungsautomat gemäß einem oder mehreren der vorgehenden Ansprüche, **dadurch gekennzeichnet, dass** die Führung (8) im Wesentlichen als Horizontalführung ausgebildet ist und innerhalb von Seitenwangen des Einlauf- oder Auslaufbereiches (1) des Reinigungsautomaten angeordnet ist.

8. Reinigungsautomat gemäß einem oder mehreren der vorgehenden Ansprüche, **dadurch gekennzeichnet, dass** sich das Spannen des Transportbandes (4) ohne Werkzeug ausführen lässt, und dass die Spanneinrichtung (6, 13,) so ausgeführt ist, dass die erreichte Vorspannung selbsttätig erhalten bleibt.

9. Reinigungsautomat gemäß einem oder mehreren der vorgehenden Ansprüche, **dadurch gekennzeichnet, dass** die Spannvorrichtung (6, 13, 17) eine Zahnstange (9) aufweist, die mit einer vorgespannten Sperrklinke (10) zusammenwirkt, die ausgeklinkt werden kann.

10. Reinigungsautomat gemäß Anspruch 9, **dadurch gekennzeichnet, dass** die Zahnstange (9) mit dem Lager der Antriebswelle bzw. der Spannachse (7) in der Führung (8) horizontal verschiebbar ist.

11. Reinigungsautomat gemäß einem oder mehrerer der vorhergehenden Ansprüche, **dadurch gekennzeichnet, dass** die mit der Zahnstange (9) zusammenwirkende Sperrklinke (10) entweder über einen, eine Feder (11) beaufschlagenden, Anschlag (35) oder über einen um eine Achse (39) auslenkenden Hebel (14) betätigt wird.

12. Reinigungsautomat gemäß einem oder mehreren der vorgehenden Ansprüche , **dadurch gekennzeichnet, dass** sich die die Sperrklinke (10) beaufschlagende Feder (11) an einer Stützfläche (38) abstützt.

13. Reinigungsautomat gemäß einem oder mehreren der vorgehenden Ansprüche , **dadurch gekennzeichnet, dass** der die Feder (11) beaufschlagende Anschlag (35) an einer Schraube (12) aufgenommen ist.

14. Reinigungsautomat gemäß einem oder mehrerer der vorhergehenden Ansprüche, **dadurch gekennzeichnet, dass** ein Wiedereinrasten der Sperrklinke (10) an der Zahnstange (9) durch Rückhalteelemente (15, 16) verhindert ist.

15. Reinigungsautomat gemäß einem oder mehrerer der vorhergehenden Ansprüche, **dadurch gekennzeichnet, dass** die Spannachse oder Antriebswelle (7) der Spanneinrichtung (6, 13, 17) über ein Zugmittel (18) gespannt ist.

16. Reinigungsautomat gemäß Anspruch 15, **dadurch gekennzeichnet, dass** das Zugmittel (18) als Seil, Kette oder Koppelgetriebe ausgebildet ist.

17. Reinigungsautomat gemäß einem oder mehrerer der vorhergehenden Ansprüche, **dadurch gekennzeichnet, dass** das Zugmittel (18) eine Umlenkung von einer horizontalen Richtung in eine vertikale Richtung erfährt.

18. Reinigungsautomat gemäß einem oder mehreren der vorgehenden Ansprüche, **dadurch gekennzeichnet, dass** sich die Vorspannung im Transportband (4) ohne den Einsatz von Werkzeug aufheben lässt.

19. Reinigungsautomat gemäß einem oder mehreren der vorgehenden Ansprüche, **dadurch gekennzeichnet, dass** die Innenseiten des Auslauf- oder Einlaufbereichs (1) vollkommen glattflächig ausgeführt sind.
